# EUROPÄISCHE PATENTANMELDUNG

(11) **EP 4 449 843 A1**
(43) Veröffentlichungstag der Anmeldung: **23.10.2024**
(21) Anmeldenummer: 24157312.0
(22) Anmeldetag: 13.02.2024
(51) Int. Cl.: A01B 69/00, A01B 79/00, G05D 1/00

(54) **ROTATIONSINVARIANTE ERKENNUNGSMUSTER FÜR LANDWIRTSCHAFTLICHE ARBEITSMASCHINEN**

(30) Priorität: 18.04.2023 DE 102023109728
(71) Anmelder: CLAAS E-Systems GmbH, 49201 Dissen (DE)
(72) Erfinder: Schröder, Axel, 33332 Gütersloh (DE); Korthals, Timo, 33818 Leopoldshöhe (DE); Redenius, Jannik, 32361 Pr. Oldendorf (DE); Töniges, Torben, 33602 Bielefeld (DE); Kildeby, Allan, 3060 Espergærde (DK); Jürschik, Peter, 33335 Gütersloh (DE); Bone, Sven, 49124 Georgsmarienhütte (DE); Monkenbusch, Robin, 33378 Rheda-Wiedenbrück (DE)
(74) Vertreter: CLAAS Gruppe

(57) **Zusammenfassung**

Die vorliegende Erfindung betrifft eine landwirtschaftliche Arbeitsmaschine (1) zum Einsatz auf einem landwirtschaftlichen Feld (2) mit einer Sensorvorrichtung (3) zur Erzeugung einer Abbildung (4) eines Umgebungsbereiches (5) der landwirtschaftlichen Arbeitsmaschine (1).

Die vorliegende Erfindung beruht auf dem allgemeinen Gedanken, dass die landwirtschaftliche Arbeitsmaschine (1) in Abhängigkeit eines rotationsinvarianten Erkennungsmusters (7), welches auch rotationsinvarianter Fiducial-Marker genannt wird, eingestellt wird.

## Beschreibung

Die vorliegende Erfindung betrifft eine landwirtschaftliche Arbeitsmaschine zum Einsatz auf einem landwirtschaftlichen Feld, wobei diese landwirtschaftliche Arbeitsmaschine wenigstens eine Sensorvorrichtung zur Erzeugung einer Abbildung eines Umgebungsbereiches der landwirtschaftlichen Arbeitsmaschine aufweist.

Gemäß der WO 2019/101418 A1 kann ein Nutzer ein mobiles Gerät tragen und einsetzen, um sogenannte Fiducial-Marker, die auch Passermarken oder Erkennungsmuster genannt werden, zu erkennen. Diese einfachen Erkennungsmuster erfordern stets, dass ein menschlicher Nutzer durch das Tragen des mobilen Gerätes die Richtigkeit der Erkennung stets prüft und sicherstellt.

Die US 11,315,258 B1 beschreibt den Einsatz von LED-Fiducial-Markern, um die Position eines gezogenen Arbeitsgeräts zu verfolgen. Dies hat jedoch den Nachteil, dass stets eine Stromquelle für die LEDs vorhanden sein muss, sodass insbesondere ein nicht gezogenes Arbeitsgerät aufgrund einer mangelnden Stromquelle keine funktionierenden LED-Fiducial-Marker aufweisen kann.

Der vorliegenden Erfindung liegt die Aufgabe zugrunde, eine verbesserte Ausführungsform einer landwirtschaftlichen Arbeitsmaschine anzugeben, die den Einsatz der landwirtschaftlichen Arbeitsmaschine basierend auf Abbildungen des Umgebungsbereiches optimiert und vereinfacht.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass die landwirtschaftliche Arbeitsmaschine in Abhängigkeit eines rotationsinvarianten Erkennungsmusters, welches auch rotationsinvarianter Fiducial-Marker genannt wird, eingestellt wird. Dieses rotationsinvariante Erkennungsmuster kann derart ausgebildet sein, dass es wenigstens einen Referenzpunkt aufweist, der sich dadurch kennzeichnet, dass bei einer beliebigen Drehung des gesamten Erkennungsmusters um diesen Referenzpunkt zwischen einem Startwinkel und einem Endwinkel sich kein wiederholendes Erkennungsmuster ausbildet, außer falls die Drehung vom Startwinkel zum Endwinkel 360° entspricht. Das rotationsinvariante Erkennungsmuster kann als rotationsinvariantes schwarz-weiß Muster ausgebildet sein. Alternativ oder zusätzlich kann rotationsinvariante Erkennungsmuster als rotationsinvariantes mehrfarbiges Muster ausgebildet sein. Dieses mehrfarbige Muster kann die Farben rot und/oder grün aufweisen. Das rotationsinvariante Erkennungsmuster kann derart ausgebildet sein, dass es aufgrund Farbvariationen und daher ohne den Einsatz zusätzlicher elektrischer Energie für eine Sensorvorrichtung erkennbares Muster aufweist. Das rotationsinvariante Erkennungsmuster kann einstückig und/oder einteilig ausgebildet sein.

Das rotationsinvariante Erkennungsmuster kann wenigstens eine Kontur, insbesondere eine Außenkontur, in Form eines Polygons, insbesondere eines planaren Polygons, und/oder eines Kreises, insbesondere eines Teilkreises und/oder Kreisbogens, aufweisen. Diese Kontur kann das rotationsinvariante Erkennungsmuster begrenzen und/oder gegenüber seiner Umgebung abgrenzen. Die Kontur des rotationsinvarianten Erkennungsmusters kann in Form eines regelmäßigen Polygons, insbesondere eines regelmäßigen planaren Polygons, ausgebildet sein. Das nicht regelmäßige Polygon und/oder das regelmäßige Polygon kann teilweise oder vollständig als Dreieck, Viereck, Fünfeck, Sechseck und/oder Achteck ausgebildet sein.

Der Referenzpunkt des rotationsinvarianten Erkennungsmusters kann ein, insbesondere geometrischer, Schwerpunkt, insbesondere Flächenschwerpunkt, sein. Dieser Schwerpunkt, insbesondere Flächenschwerpunkt, kann einen Mittelpunkt des rotationsinvarianten Erkennungsmusters, insbesondere innerhalb der Kontur, ausbilden.

Die erfindungsgemäße landwirtschaftliche Arbeitsmaschine kann als selbstfahrende landwirtschaftliche Arbeitsmaschine, insbesondere als selbstfahrender Feldhäcksler oder als selbstfahrender Mähdrescher, oder als Traktor, insbesondere als Traktor mit einem Anbaugerät, für den landwirtschaftlichen Einsatz auf einem landwirtschaftlichen Feld ausgebildet sein. Dieses landwirtschaftliche Feld kann ein landwirtschaftlich genutzter Erdboden sein, der regelmäßig bearbeitet und mit einer Feldfrucht bestellt wird.

Die landwirtschaftliche Arbeitsmaschine weist wenigstens eine Sensorvorrichtung zu Erzeugung einer Abbildung, insbesondere einer digitalen Abbildung, des Umgebungsbereiches der landwirtschaftlichen Arbeitsmaschine auf. Diese Abbildung kann eine zweidimensionale Abbildung sein. Diese Sensorvorrichtung kann als optisch-elektronische Einrichtung zur Videoüberwachung und/oder Videoaufzeichnung ausgebildet sein. Eine Videoüberwachung und/oder Videoaufzeichnung kann eine Sequenz von optisch-elektronisch aufgenommen Abbildungen des Umgebungsbereiches der landwirtschaftlichen Arbeitsmaschine umfassen.

Die landwirtschaftliche Arbeitsmaschine weist, insbesondere innerhalb der landwirtschaftlichen Arbeitsmaschine und/oder außerhalb der landwirtschaftliche Arbeitsmaschine, ein Auswertungsmodul auf, welches dazu vorgesehen und eingerichtet, insbesondere ausgebildet und/oder programmiert, ist, zu ermitteln, ob in der mittels der Sensorvorrichtung erzeugten Abbildung ein rotationsinvariantes Erkennungsmuster vorhanden ist.

Das Auswertungsmodul ist dazu vorgesehen und eingerichtet ist, eine Positionierung, insbesondere eine dreidimensionale Positionierung, eines ermittelten rotationsinvarianten Erkennungsmusters bezüglich der Sensorvorrichtung der landwirtschaftlichen Arbeitsmaschine für eine Einstellvorrichtung der landwirtschaftlichen Arbeitsmaschine zu bestimmen.

Die Einstellvorrichtung der landwirtschaftlichen Arbeitsmaschine ist dazu vorgesehen und eingerichtet, insbesondere ausgebildet und/oder programmiert, die landwirtschaftliche Arbeitsmaschine in Abhängigkeit ermittelter, insbesondere der mittels des Auswertungsmoduls ermittelter, rotationsinvarianter Erkennungsmuster einzustellen. Die Einstellvorrichtung kann innerhalb der landwirtschaftlichen Arbeitsmaschine angeordnet sein. Die Einstellvorrichtung der landwirtschaftlichen Arbeitsmaschine kann dazu ausgebildet und/oder programmiert sein, die landwirtschaftliche Arbeitsmaschine und/oder Komponenten der landwirtschaftlichen Arbeitsmaschine in Abhängigkeit ermittelter, insbesondere der mittels des Auswertungsmoduls ermittelter, rotationsinvarianter Erkennungsmuster zu steuern und/oder zu regeln.

Bei einer vorteilhaften Weiterbildung der erfindungsgemäßen Lösung ist vorgesehen, dass das Auswertungsmodul dazu vorgesehen und eingerichtet ist, eine Ausrichtung eines ermittelten rotationsinvarianten Erkennungsmusters bezüglich sechs Freiheitsgraden, insbesondere ausgehend von der Sensorvorrichtung und/oder von dem Referenzpunkt des Erkennungsmusters, für die Einstellvorrichtung der landwirtschaftlichen Arbeitsmaschine zu bestimmen, wobei die Einstellvorrichtung dazu vorgesehen und eingerichtet ist, die landwirtschaftliche Arbeitsmaschine in Abhängigkeit einer ermittelten Ausrichtung eines ermittelten rotationsinvarianten Erkennungsmusters einzustellen. Mit anderen Worten ausgedrückt, beschreibt diese Ausrichtung die Lage und/oder Position des rotationsinvarianten Erkennungsmusters im dreidimensionalen Raum bezüglich der Sensorvorrichtung und/oder dem Referenzpunkt.

Bei einer vorteilhaften Weiterbildung der erfindungsgemäßen Lösung ist vorgesehen, dass das Auswertungsmodul dazu vorgesehen und eingerichtet ist, einem ermittelten rotationsinvarianten Erkennungsmuster wenigstens einen Richtungsvektor, insbesondere dreidimensionalen Richtungsvektor, zuzuordnen, wobei die Einstellvorrichtung dazu vorgesehen und eingerichtet ist, die landwirtschaftliche Arbeitsmaschine in Abhängigkeit eines zugeordneten Richtungsvektors, insbesondere dreidimensionalen Richtungsvektors, eines ermittelten rotationsinvarianten Erkennungsmusters einzustellen.

Bei einer vorteilhaften Weiterbildung der erfindungsgemäßen Lösung ist vorgesehen, dass wenigstens ein vom Auswertungsmodul ermitteltes rotationsinvariantes Erkennungsmuster auf einer weiteren landwirtschaftlichen Arbeitsmaschine angeordnet ist. Diese weitere landwirtschaftliche Arbeitsmaschine kann als selbstfahrender Feldhäcksler oder als selbstfahrender Mähdrescher, oder als Traktor, insbesondere als Traktor mit einem Anbaugerät, für den landwirtschaftlichen Einsatz auf einem landwirtschaftlichen Feld ausgebildet sein. Hierdurch wird beispielsweise eine Ermittlung der Beabstandung dieser zwei landwirtschaftlichen Arbeitsmaschinen ermöglicht.

Bei einer vorteilhaften Weiterbildung der erfindungsgemäßen Lösung ist vorgesehen, dass wenigstens ein vom Auswertungsmodul ermitteltes rotationsinvariantes Erkennungsmuster auf einem Anbaugerät für landwirtschaftliche Arbeitsmaschine angeordnet ist. Dieses Anbaugerät kann frontseitig und/oder hinterseitig, insbesondre wieder lösbar, an die landwirtschaftliche Arbeitsmaschine angekoppelt werden. Dieses Anbaugerät kann ein Schneidwerk und/oder ein Anhänger sein. Hierdurch wird beispielsweise das Ankoppeln und/oder Entkoppelt des Anbaugerät für den Fahrer der landwirtschaftlichen Arbeitsmaschine vereinfacht.

Bei einer vorteilhaften Weiterbildung der erfindungsgemäßen Lösung ist vorgesehen, dass mehrere vom Auswertungsmodul ermittelte rotationsinvariante Erkennungsmuster voneinander beabstandet auf der weiteren landwirtschaftlichen Arbeitsmaschine angeordnet sind, und/oder dass mehrere vom Auswertungsmodul ermittelte rotationsinvariante Erkennungsmuster voneinander beabstandet auf dem Anbaugerät für landwirtschaftliche Arbeitsmaschine angeordnet sind. Ferner kann die weitere landwirtschaftlichen Arbeitsmaschine und/oder das Anbaugerät jeweils wenigstens zwei unterschiedliche rotationsinvariante Erkennungsmuster aufweisen. Hierdurch wird beispielsweise eine einfache Unterscheidung zwischen einer rechten Seite und linken Seite der weiteren landwirtschaftlichen Arbeitsmaschine und/oder des Anbaugeräts ermöglicht.

Bei einer vorteilhaften Weiterbildung der erfindungsgemäßen Lösung ist vorgesehen, dass dass wenigstens ein ermitteltes rotationsinvariantes Erkennungsmuster, welches auf der weiteren landwirtschaftlichen Arbeitsmaschine angeordnet ist, lösbar und/oder nicht lösbar an der weiteren landwirtschaftlichen Arbeitsmaschine befestigt ist. Ein lösbar ausgebildetes rotationsinvariantes Erkennungsmuster kann beispielsweise von einer landwirtschaftlichen Arbeitsmaschine, die gerade nicht einsetzt wird, zerstörungsfrei getrennt und dafür bei einer anderen landwirtschaftlichen Arbeitsmaschine, die gerade auf dem landwirtschaftlichen Feld eingesetzt werden soll, angeordnet werden. Hierdurch wird ein flexibler und kostengünstiger Einsatz der rotationsinvarianten Erkennungsmuster ermöglicht.

Bei einer vorteilhaften Weiterbildung der erfindungsgemäßen Lösung ist vorgesehen, dass wenigstens ein ermitteltes rotationsinvariantes Erkennungsmuster, welches auf dem Anbaugerät angeordnet ist, lösbar und/oder nicht lösbar auf einem Anbaugerät befestigt ist. Ein lösbar ausgebildetes rotationsinvariantes Erkennungsmuster kann beispielsweise von einem Anbaugerät, welches gerade nicht einsetzt wird, zerstörungsfrei getrennt und dafür bei einem anderen Anbaugerät, welches gerade auf dem landwirtschaftlichen Feld eingesetzt werden soll, angeordnet werden. Hierdurch wird ein flexibler und kostengünstiger Einsatz der rotationsinvarianten Erkennungsmuster ermöglicht.

Bei einer vorteilhaften Weiterbildung der erfindungsgemäßen Lösung ist vorgesehen, dass wenigstens ein ermitteltes rotationsinvariantes Erkennungsmuster durch Komponenten, insbesondere geometrische Strukturen und/oder die Farbe dieser Komponenten, und/oder durch Markensymbole, insbesondere Wortmarken, auf der weiteren landwirtschaftlichen Arbeitsmaschine und/oder auf dem Anbaugerät ausgebildet ist.

Bei einer vorteilhaften Weiterbildung der erfindungsgemäßen Lösung ist vorgesehen, dass die Einstellvorrichtung dazu vorgesehen und eingerichtet ist, die landwirtschaftliche Arbeitsmaschine in Abhängigkeit eines ermittelten rotationsinvarianten Erkennungsmusters derart einzustellen, dass ein Anbaugerät automatisch mit der landwirtschaftlichen Arbeitsmaschine gekoppelt und/oder automatisch von der landwirtschaftlichen Arbeitsmaschine entkoppelt wird. Hierdurch kann eine automatisierte Schneidwerksablage und/oder Schneidwerksaufnahme ermöglicht werden.

Bei einer vorteilhaften Weiterbildung der erfindungsgemäßen Lösung ist vorgesehen, dass die Einstellvorrichtung dazu vorgesehen und eingerichtet ist, die landwirtschaftliche Arbeitsmaschine in Abhängigkeit eines ermittelten rotationsinvarianten Erkennungsmusters derart einzustellen, dass die landwirtschaftliche Arbeitsmaschine während des Einsatz auf dem landwirtschaftlichen Feld automatisch eine Beabstandung zur einer weiteren landwirtschaftlichen Arbeitsmaschine einhält.

Bei einer vorteilhaften Weiterbildung der erfindungsgemäßen Lösung ist vorgesehen, dass die Sensorvorrichtung eine Kameravorrichtung, insbesondere eine Monokameravorrichtung, zur Erzeugung eines zweidimensionalen Bildes bezüglich des Umgebungsbereiches ausbildet. Das Auswertungsmodul kann dazu vorgesehen und eingerichtet sein, zu ermitteln, ob in der mittels der Kameravorrichtung, insbesondere der Monokameravorrichtung, erzeugten zweidimensionalen Bild ein rotationsinvariantes Erkennungsmuster vorhanden ist.

Bei einer vorteilhaften Weiterbildung der erfindungsgemäßen Lösung ist vorgesehen, dass die landwirtschaftliche Arbeitsmaschine als autonome selbstfahrende landwirtschaftliche Arbeitsmaschine ausgebildet ist. In der modernen Landwirtschaft sind vermehrt Bestrebungen dahingehend zu erkennen, Arbeitseinsätze autonom durchzuführen, um die Produktivität und Wirtschaftlichkeit der Prozesse zu erhöhen. Hierfür kommen sogenannte autonome selbstfahrende landwirtschaftliche Arbeitsmaschinen zum Einsatz, die sich dadurch auszeichnen, dass kein Bediener in einer Kabine zur Steuerung derselben vorhanden ist bzw. sein muss. Demnach steht bei autonomen selbstfahrenden landwirtschaftlichen Arbeitsmaschinen kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Arbeitsmaschine auf dem landwirtschaftlichen Feld ausführen bzw. beauftragen kann. Derartige autonome landwirtschaftliche Arbeitsmaschinen werden daher auch als unbemannte selbstfahrende landwirtschaftliche Arbeitsmaschinen bezeichnet. Die autonome selbstfahrende landwirtschaftliche Arbeitsmaschine kann als autonom selbstfahrender Feldhäcksler oder als autonom selbstfahrender Mähdrescher, oder als autonomer Traktor, insbesondere als autonomer Traktor mit einem Anbaugerät, für den landwirtschaftlichen Einsatz auf einem landwirtschaftlichen Feld ausgebildet sein.

Ferner betrifft die Erfindung ein Auswertungsmodul zur Ermittlung von rotationsinvarianten Erkennungsmustern in Abbildungen, die mittels einer Sensorvorrichtung der erfindungsgemäßen landwirtschaftlichen Arbeitsmaschine erzeugt wurden. Dieses Auswertungsmodul kann vorangehend und/oder nachfolgend beschriebene Merkmale aufweisen.

Ferner betrifft die Erfindung die Verwendung von rotationsinvarianten Erkennungsmustern zur Einstellung einer erfindungsgemäßen landwirtschaftlichen Arbeitsmaschine. Diese rotationsinvarianten Erkennungsmuster können vorangehend und/oder nachfolgend beschriebene Merkmale aufweisen.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße landwirtschaftliche Arbeitsmaschine beim Einsatz auf einem landwirtschaftlichen Feld, und
- Fig. 2: eine Abbildung eines rotationsinvarianten Erkennungsmusters mit einem zugeordneten Richtungsvektor,
- Fig. 3: einen mit mehreren rotationsinvarianten Erkennungsmustern ausgestatteten Anhänger, und
- Fig. 4: eine landwirtschaftliche Arbeitsmaschine mit mehreren rotationsinvarianten Erkennungsmustern.

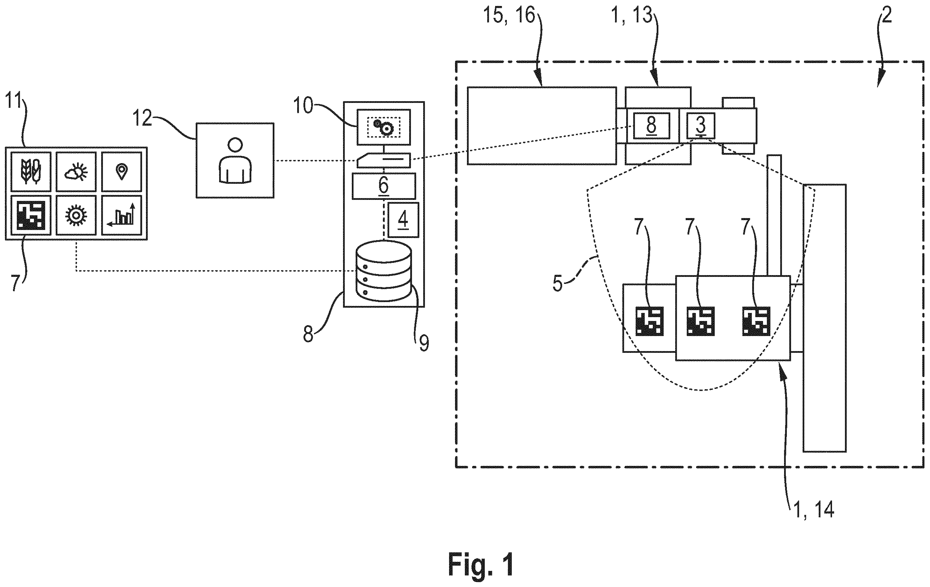

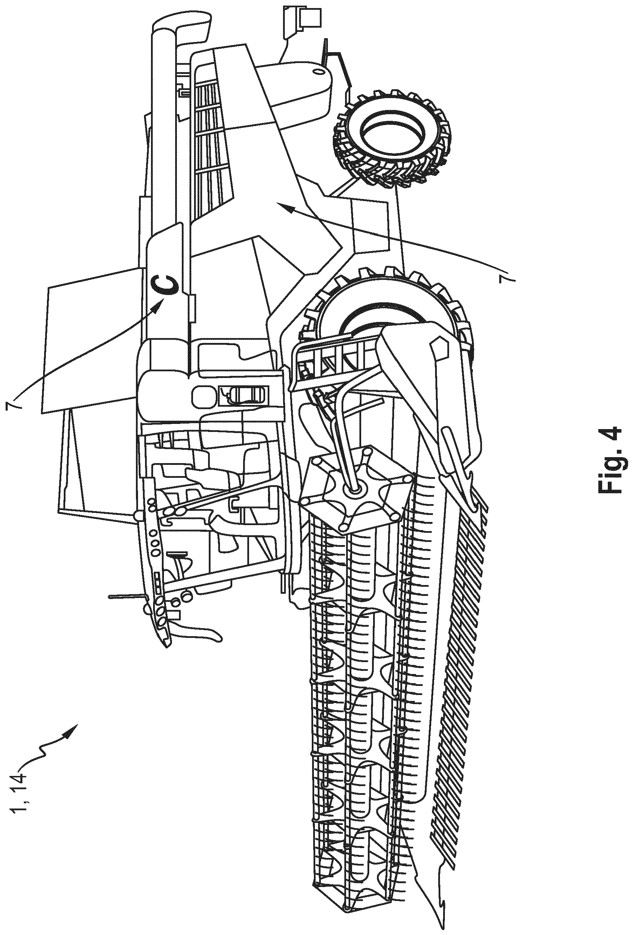

Fig. 1 zeigt eine erfindungsgemäße landwirtschaftliche Arbeitsmaschine 1, die beispielweise als Traktor 13 mit einem Anbaugerät 15 in Form eines Anhängers 16 ausgebildet ist, während eines landwirtschaftlichen Einsatzes auf einem landwirtschaftlichen Feld 2. Diese landwirtschaftliche Arbeitsmaschine 1, 13 weist wenigstens eine Sensorvorrichtung 3 zur Erzeugung einer digitalen Abbildung 4 des Umgebungsbereiches 5 der landwirtschaftlichen Arbeitsmaschine 1, 13 auf. Neben diesem Traktor 13 befindet sich auf dem landwirtschaftlichen Feld 2 eine weitere als selbstfahrenden Mähdreschers 14 ausgebildete landwirtschaftliche Arbeitsmaschine 1.

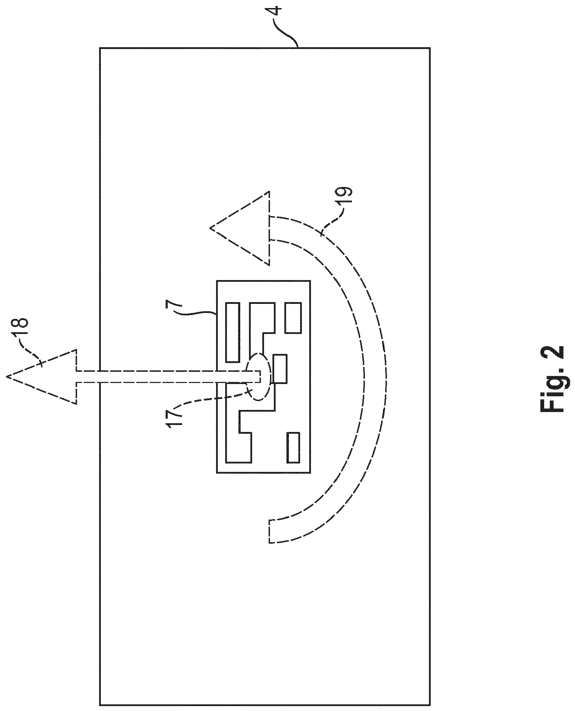

Die digitale Abbildung 4 kann eine zweidimensionale Abbildung, wie in der Fig. 2 angedeutet, des Umgebungsbereiches 5 der landwirtschaftlichen Arbeitsmaschine 1, 13 sein. Die Sensorvorrichtung 3 kann als optisch-elektronische Einrichtung zur Videoüberwachung und/oder Videoaufzeichnung ausgebildet sein. Eine Videoüberwachung und/oder Videoaufzeichnung kann eine Sequenz von optisch-elektronisch aufgenommen Abbildungen 4, insbesondere zweidimensionalen Abbildungen, des Umgebungsbereiches 5 der landwirtschaftlichen Arbeitsmaschine 1, 13 umfassen. Die Sensorvorrichtung 3 kann eine Kameravorrichtung, insbesondere eine Monokameravorrichtung, zur Erzeugung des zweidimensionalen Bildes bezüglich des Umgebungsbereiches 5 ausbilden.

Die als selbstfahrender Mähdrescher 14 ausgebildete landwirtschaftliche Arbeitsmaschine 1 weist mehrere rotationsinvariante Erkennungsmuster 7 auf. Die erfindungsgemäße als Traktor 13 ausgebildete landwirtschaftliche Arbeitsmaschine 1 nutzt ein Auswertungsmodul 6, welches dazu vorgesehen und eingerichtet ist, zu ermitteln, ob in der mittels der Sensorvorrichtung 3 erzeugten Abbildung 4 ein rotationsinvariantes Erkennungsmuster 7 vorhanden ist. Außerdem ist das Auswertungsmodul 6 dazu vorgesehen und eingerichtet, eine Positionierung eines derart ermittelten rotationsinvarianten Erkennungsmusters 7 bezüglich der Sensorvorrichtung 3 der landwirtschaftlichen Arbeitsmaschine 1 für eine Einstellvorrichtung 8 der landwirtschaftlichen Arbeitsmaschine 1 zu bestimmen, wobei die Einstellvorrichtung 8 dazu vorgesehen und eingerichtet ist, die landwirtschaftliche Arbeitsmaschine 1 in Abhängigkeit ermittelter rotationsinvarianter Erkennungsmuster 7 einzustellen. Beispielsweise kann Einstellvorrichtung 8 die Fahrrichtung und/oder die Fahrgeschwindigkeit des Traktors 13 in Abhängigkeit ermittelter rotationsinvarianter Erkennungsmuster 7 des selbstfahrenden Mähdreschers 14 einstellen.

Die Einstellvorrichtung 8 kann eine Recheneinheit 18 und eine Datenbank und/oder einen Datenspeicher 9 aufweisen. Im Datenspeicher 9 können vordefinierte rotationsinvariante Erkennungsmuster 7 hinterlegt sein. Diese hinterlegten rotationsinvarianten Erkennungsmuster 7 können mit für den Einsatz auf dem landwirtschaftlichen Feld 2 relevanten Parametern, insbesondere Betriebsparametern und/oder Eigenschaftsparametern, verknüpft sein. Die Einstellvorrichtung 8 kann zusätzlich beispielsweise einem Fahrer 8 des Traktors 13 basierend auf dem rotationsinvariante Erkennungsmuster 7 relevante Informationen auf einem nicht dargestellten Monitor anzeigen.

Die Fig. 2 zeigt eine aufgenommene Abbildungen 4, welche ein rotationsinvariantes Erkennungsmuster 7 aufweist. Dieses rotationsinvariante Erkennungsmuster 7 ist derart ausgebildet, dass es wenigstens einen Referenzpunkt 17 aufweist, der sich dadurch kennzeichnet, dass bei einer beliebigen Drehung entlang einer Drehrichtung 19 des gesamten Erkennungsmusters 7 um diesen Referenzpunkt 17 zwischen einem Startwinkel und einem Endwinkel sich kein wiederholendes Erkennungsmuster 7 ausbildet, außer falls die Drehung vom Startwinkel zum Endwinkel 360° entspricht. Das rotationsinvariante Erkennungsmuster 7 kann als rotationsinvariantes schwarz-weiß Muster ausgebildet sein. Alternativ oder zusätzlich kann rotationsinvariante Erkennungsmuster 7 als rotationsinvariantes mehrfarbiges Muster ausgebildet sein. Dieses mehrfarbige Muster kann die Farben rot und/oder grün aufweisen. Das rotationsinvariante Erkennungsmuster 7 kann derart ausgebildet sein, dass es aufgrund Farbvariationen und daher ohne den Einsatz zusätzlicher elektrischer Energie für eine Sensorvorrichtung erkennbares Muster aufweist. Das rotationsinvariante Erkennungsmuster 7 kann einstückig und/oder einteilig ausgebildet sein.

Das Auswertungsmodul 6 kann dazu vorgesehen und eingerichtet sein, einem ermittelten rotationsinvarianten Erkennungsmuster 7 wenigstens einen Richtungsvektor 18, insbesondere einen dreidimensionalen Richtungsvektor, zuzuordnen, wobei die Einstellvorrichtung 8 dazu vorgesehen und eingerichtet ist, die landwirtschaftliche Arbeitsmaschine 1,14 in Abhängigkeit des zugeordneten Richtungsvektors 18, insbesondere dreidimensionalen Richtungsvektors, des ermittelten rotationsinvarianten Erkennungsmusters 7 einzustellen.

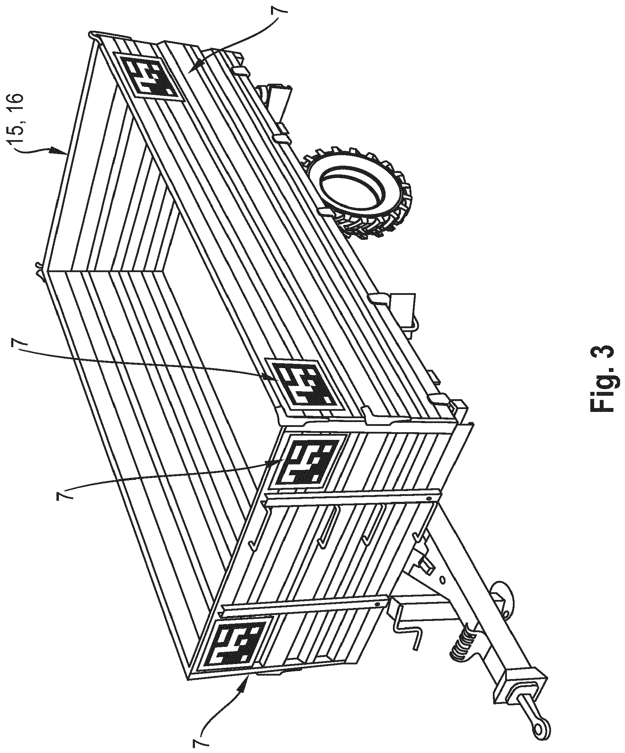

Die Fig. 3 zeigt beispielhaft mehrere rotationsinvariante Erkennungsmuster 7 auf dem Anbaugerät 15 des Traktors 13, wobei diese rotationsinvarianten Erkennungsmuster 7 voneinander beabstandet auf dem Anbaugerät 15 angeordnet sind. Die Einstellvorrichtung 8 kann dazu vorgesehen und eingerichtet sein, die als Traktor 13 ausgebildete landwirtschaftliche Arbeitsmaschine 1 in Abhängigkeit der ermittelten rotationsinvarianten Erkennungsmuster 7 derart einzustellen, dass der Anhänger 16 automatisch mit dem Traktor 13 gekoppelt und/oder automatisch von dem Traktor 13 entkoppelt wird.

Die Fig. 4 zeigt beispielhaft die mehreren rotationsinvarianten Erkennungsmuster 7 auf der weiteren landwirtschaftlichen Arbeitsmaschine 1,14, wobei diese rotationsinvariante Erkennungsmuster 7 durch Komponenten, insbesondere geometrische Strukturen und/oder die nicht dargestellte Farbe dieser Komponenten, und durch Markensymbole, insbesondere Wortmarken, ausgebildet sind. Die Einstellvorrichtung 8 kann dazu vorgesehen und eingerichtet sein, die als Traktor 13 ausgebildete landwirtschaftliche Arbeitsmaschine 1 in Abhängigkeit dieser ermittelten rotationsinvarianten Erkennungsmustern 7 derart einzustellen, dass der Traktors 13 während des Einsatz auf dem landwirtschaftlichen Feld 2 automatisch eine passende Beabstandung zu dieser weiteren landwirtschaftlichen Arbeitsmaschine 1,14 einhält.

Wenigstens eine dieser landwirtschaftlichen Arbeitsmaschinen 1 kann als autonome selbstfahrende landwirtschaftliche Arbeitsmaschine ausgebildet sein.

### Bezugszeichenliste

- 1: Landwirtschaftliche Arbeitsmaschine
- 2: Landwirtschaftliches Feld
- 3: Sensorvorrichtung
- 4: Abbildung
- 5: Umgebungsbereich
- 6: Auswertungsmodul
- 7: rotationsinvariantes Erkennungsmuster
- 8: Einstellvorrichtung
- 9: Datenspeicher
- 10: Recheneinheit
- 11: Datensatz
- 12: Fahrer
- 13: Traktor
- 14: Mähdrescher
- 15: Anbaugerät
- 16: Anhänger
- 17: Referenzpunkt
- 18: Richtungsvektor
- 19: Drehrichtung

## Patentansprüche

1. Landwirtschaftliche Arbeitsmaschine (1) zum Einsatz auf einem landwirtschaftlichen Feld (2),
- mit einer Sensorvorrichtung (3) zur Erzeugung einer Abbildung (4) eines Umgebungsbereiches (5) der landwirtschaftlichen Arbeitsmaschine (1),
**dadurch gekennzeichnet,**
- **dass** ein Auswertungsmodul (6) dazu vorgesehen und eingerichtet ist, zu ermitteln, ob in der mittels der Sensorvorrichtung (3) erzeugten Abbildung (4) ein rotationsinvariantes Erkennungsmuster (7) vorhanden ist,
- wobei das Auswertungsmodul (6) dazu vorgesehen und eingerichtet ist, eine Positionierung eines ermittelten rotationsinvarianten Erkennungsmusters (7) bezüglich der Sensorvorrichtung (3) der landwirtschaftlichen Arbeitsmaschine (1) für eine Einstellvorrichtung (8) der landwirtschaftlichen Arbeitsmaschine (1) zu bestimmen,
- wobei die Einstellvorrichtung (8) dazu vorgesehen und eingerichtet ist, die landwirtschaftliche Arbeitsmaschine (1) in Abhängigkeit ermittelter rotationsinvarianter Erkennungsmuster (7) einzustellen.

2. Landwirtschaftliche Arbeitsmaschine (1) nach Anspruch 1,
**dadurch gekennzeichnet,**
- **dass** das Auswertungsmodul (6) dazu vorgesehen und eingerichtet ist, eine Ausrichtung eines ermittelten rotationsinvarianten Erkennungsmusters (7) bezüglich sechs Freiheitsgraden für die Einstellvorrichtung (8) der landwirtschaftlichen Arbeitsmaschine (1) zu bestimmen,
- wobei die Einstellvorrichtung (8) dazu vorgesehen und eingerichtet ist, die landwirtschaftliche Arbeitsmaschine (1) in Abhängigkeit einer ermittelten Ausrichtung eines ermittelten rotationsinvarianten Erkennungsmusters (7) einzustellen.

3. Landwirtschaftliche Arbeitsmaschine (1) nach Anspruch 1 oder 2,
**dadurch gekennzeichnet,**
- **dass** das Auswertungsmodul (6) dazu vorgesehen und eingerichtet ist, einem ermittelten rotationsinvarianten Erkennungsmuster (7) wenigstens einen Richtungsvektor (18) zuzuordnen,
- wobei die Einstellvorrichtung (8) dazu vorgesehen und eingerichtet ist, die landwirtschaftliche Arbeitsmaschine (1) in Abhängigkeit eines zugeordneten Richtungsvektors (18) eines ermittelten rotationsinvarianten Erkennungsmusters (7) einzustellen.

4. Landwirtschaftliche Arbeitsmaschine (1) nach einem der vorhergehenden Ansprüche,
**dadurch gekennzeichnet,**
**dass** wenigstens ein vom Auswertungsmodul (6) ermitteltes rotationsinvariantes Erkennungsmuster (7) auf einer weiteren landwirtschaftlichen Arbeitsmaschine angeordnet ist.

5. Landwirtschaftliche Arbeitsmaschine (1) nach einem der vorhergehenden Ansprüche,
**dadurch gekennzeichnet,**
**dass** wenigstens ein vom Auswertungsmodul (6) ermitteltes rotationsinvariantes Erkennungsmuster (7) auf einem Anbaugerät (15) für landwirtschaftliche Arbeitsmaschine (1) angeordnet ist.

6. Landwirtschaftliche Arbeitsmaschine (1) nach Anspruch 4 oder 5,
**dadurch gekennzeichnet,**
- **dass** mehrere vom Auswertungsmodul (6) ermittelte rotationsinvariante Erkennungsmuster (7) voneinander beabstandet auf der weiteren landwirtschaftlichen Arbeitsmaschine angeordnet sind, und/oder
- **dass** mehrere vom Auswertungsmodul (6) ermittelte rotationsinvariante Erkennungsmuster (7) voneinander beabstandet auf dem Anbaugerät (15) für landwirtschaftliche Arbeitsmaschine (1) angeordnet sind.

7. Landwirtschaftliche Arbeitsmaschine (1) nach einem der Ansprüche 4 bis 6,
**dadurch gekennzeichnet,**
**dass** wenigstens ein ermitteltes rotationsinvariantes Erkennungsmuster (7), welches auf der weiteren landwirtschaftlichen Arbeitsmaschine angeordnet ist, lösbar und/oder nicht lösbar an der weiteren landwirtschaftlichen Arbeitsmaschine befestigt ist.

8. Landwirtschaftliche Arbeitsmaschine (1) nach einem der Ansprüche 4 bis 7,
**dadurch gekennzeichnet,**
**dass** wenigstens ein ermitteltes rotationsinvariantes Erkennungsmuster (7), welches auf dem Anbaugerät (15) angeordnet ist, lösbar und/oder nicht lösbar auf einem Anbaugerät (15) befestigt ist.

9. Landwirtschaftliche Arbeitsmaschine (1) nach einem der Ansprüche 4 bis 8,
**dadurch gekennzeichnet,**
**dass** wenigstens ein ermitteltes rotationsinvariantes Erkennungsmuster (7) durch Komponenten, insbesondere geometrische Strukturen und/oder die Farbe dieser Komponenten, und/oder durch Markensymbole, insbesondere Wortmarken, auf der weiteren landwirtschaftlichen Arbeitsmaschine und/oder auf dem Anbaugerät (15) ausgebildet ist.

10. Landwirtschaftliche Arbeitsmaschine (1) nach einem der vorhergehenden Ansprüche,
**dadurch gekennzeichnet,**
**dass** die Einstellvorrichtung (8) dazu vorgesehen und eingerichtet ist, die landwirtschaftliche Arbeitsmaschine (1) in Abhängigkeit eines ermittelten rotationsinvarianten Erkennungsmusters (7) derart einzustellen, dass ein Anbaugerät (15) automatisch mit der landwirtschaftlichen Arbeitsmaschine (1) gekoppelt und/oder automatisch von der landwirtschaftlichen Arbeitsmaschine (1) entkoppelt wird.

11. Landwirtschaftliche Arbeitsmaschine (1) nach einem der vorhergehenden Ansprüche,
**dadurch gekennzeichnet,**
**dass** die Einstellvorrichtung (8) dazu vorgesehen und eingerichtet ist, die landwirtschaftliche Arbeitsmaschine (1) in Abhängigkeit eines ermittelten rotationsinvarianten Erkennungsmusters (7) derart einzustellen, dass die landwirtschaftliche Arbeitsmaschine (1) während des Einsatz auf dem landwirtschaftlichen Feld (2) automatisch eine Beabstandung zur einer weiteren landwirtschaftlichen Arbeitsmaschine einhält.

12. Landwirtschaftliche Arbeitsmaschine (1) nach einem der vorhergehenden Ansprüche,
**dadurch gekennzeichnet,**
**dass** die Sensorvorrichtung (3) eine Kameravorrichtung, insbesondere eine Monokameravorrichtung, zur Erzeugung eines zweidimensionalen Bildes bezüglich des Umgebungsbereiches (5) ausbildet.

13. Landwirtschaftliche Arbeitsmaschine (1) nach einem der vorhergehenden Ansprüche,
**dadurch gekennzeichnet,**
**dass** die landwirtschaftliche Arbeitsmaschine (1) als autonome selbstfahrende landwirtschaftliche Arbeitsmaschine (1) ausgebildet ist.

14. Auswertungsmodul (6) zur Ermittlung von rotationsinvarianten Erkennungsmustern (7) in Abbildungen (4), die mittels einer Sensorvorrichtung (3) einer landwirtschaftlichen Arbeitsmaschine (1) nach einem der Ansprüche 1 bis 13 erzeugt wurden.

15. Verwendung von rotationsinvarianten Erkennungsmustern (7) zur Einstellung einer landwirtschaftlichen Arbeitsmaschine (1) nach einem der Ansprüche 1 bis 13.
